# EUROPEAN PATENT APPLICATION

(11) **EP 4 560 587 A1**
(43) Date of publication of application: **28.05.2025**
(21) Application number: 23212334.9
(22) Date of filing: 27.11.2023
(51) Int. Cl.: G06V 10/82, G06V 20/52, G06V 20/58, G06T 7/80, G06V 20/54

(54) **METHOD AND SYSTEM FOR CLASSIFYING AN OCCUPANCY OF A PARKING SPACE**

(71) Applicant: Kopernikus Automotive GmbH, 04179 Leipzig (DE)
(72) Inventor: Jenzowsky, Stefan, 91325 Adelsdorf (DE)
(74) Representative: Seemann & Partner Patentanwälte mbB

(57) **Abstract**

The invention relates to a method for classifying an occupancy of a parking space as well as a system for classifying an occupancy of a parking space.

According to the invention, at least one camera (30) captures at least one image (72) of the parking space (20), in particular at an oblique angle, the at least one image (72) is fed to and processed by a parking space classifier (80), wherein the parking space classifier (80) extracts features from the images (72) of the parking space (20) and classifies the occupancy (92) of the parking space (20) as unoccupied or occupied, wherein the parking space classifier (80) comprises at least one machine learning model configured, in particular trained, to extract features from the at least one image (72) of the parking space (20) and to classify the occupancy (92) of the parking space (20) based on the extracted features.

## Description

The invention relates to a method for classifying an occupancy of a parking space as well as a system for classifying an occupancy of a parking space.

When vehicles such as cars are not in use, they are usually parked in parking facilities like car parks or multilevel parking garages. Individual parking spaces are provided for single vehicles.

Management of parking facilities is constantly evolving, supported by modern technology. For example, simple technical solutions such as automatic entry and exit barriers can be used to estimate the approximate number of free parking spaces by counting the number of entries and exits. This is used, for example, for traffic coordination by car-park routing systems.

Vehicles' technology is also advancing, especially in the area of autonomous driving. Cars can cover small and large distances autonomously with built-in control units that take over control of steering, acceleration and braking, supported by in-vehicle environmental sensors. This is used, for example, in automated parking garages, where instead of a driver personally driving the vehicle to a parking space, the vehicle autonomously drives from a drop-off point to a parking space. In Automated Valet Parking (AVP) systems, for example, an intelligent parking garage management system contacts the built-in control unit and directs it to steer the vehicle to a parking space assigned to it by the AVP system. Such AVP systems may be implemented either in a pure AVP mode wherein all cars are automatically steered towards their respective parking spaces by the AVP system, or in a mixed mode, wherein the parking garage has an AVP system but is also frequented by drivers who steer their vehicles to their respective unassigned parking spaces.

For such advanced interconnected systems to manage parking automatically or semi-automatically, it is crucial to know the current status of the car park, e.g., to have an overview which parking space is unoccupied and which parking space is occupied. This is especially true for mixed mode AVP system parking garages, where the AVP system does not assign all of the parking spaces to autonomously driving vehicles.

Another advantage of having current and complete information over which parking spaces are occupied and which are free is that, even in simple parking facilities, this information can be used to inform users about which parking space are available, or how many parking spaces are available on each level, thus enabling the system to implement a simple in-facility traffic guidance system. This relates to public parking facilities as well as factory premises or logistics facilities with vehicles being, e.g., automobiles, trucks, buses, forklift trucks or trailers.

An old-fashioned approach comprises video surveillance cameras and human staff manually identifying unoccupied and occupied parking spaces. More advanced is the use of ultrasonic sensors installed near each parking space and determining from the ultrasonic reflection signal if a vehicle is parked close to the sensor. However, these known solutions are not good at identifying the occupancy of parking spaces if vehicles are parked in a non-conforming way, such as on the boundary between two adjacent parking spaces, or at an oblique angle towards the orientation of the parking space, or at too great a distance to a sensor.

It is an object of the invention to determine the occupancy of a parking space in a simple and efficient manner.

The object is solved by a method of classifying an occupancy of a parking space, wherein at least one camera captures at least one image of the parking space, in particular at an oblique angle, the at least one image is fed to and processed by a parking space classifier, wherein the parking space classifier extracts features from the images of the parking space and classifies the occupancy of the parking space as unoccupied or occupied, wherein the parking space classifier comprises at least one machine learning model configured, in particular trained, to extract features from the at least one image of the parking space and to classify the occupancy of the parking space based on the extracted features.

An underlying idea of the invention is to correlate the classification of the occupancy of a parking space with the identification of characteristic structures of the parking space itself by image recognition, instead of primarily relying on recognizing a vehicle. The parking space classifier analyzes the at least one image of the parking space and if it recognizes features of the unoccupied, i.e., empty, parking space to a sufficient level, the parking space is classified as unoccupied. If, on the other hand, some or all of the structural characteristics of the parking space are not recognized in the input data, then it is to be assumed that these characteristics are obstructed from view by a vehicle parked on the parking space, and the parking space is classified as occupied. Furthermore, the spatial distribution of characteristic features obstructed from view can be used to identify the location and dimensions of a parked vehicle or any other object located on the parking space that renders the parking space occupied, i.e., not suitable to be parked on by a newly arrived vehicle.

Using image recognition for classifying structural characteristics of a parking space allows for a cost-effective and reliable determination if the parking space is occupied. A single camera may be sufficient to monitor a parking space and may even monitor multiple parking spaces simultaneously. As the analysis is based on existing structural characteristics of the parking space and its surroundings, no additional equipment, such as identification beacons, are necessary. Therefore, the described method can be implemented in existing car parks with reasonable effort.

Usually, image recognition or object detection is aimed at a specific object, such as identifying an animal in a picture and classifying the animal as cat or dog. The presented method of classifying an occupancy of a parking space uses an approach to detect an unoccupied parking space as object in an image. For this, the parking space classifier may be configured to include a fingerprint of the parking space to be classified. In particular, the parking space classifier is trained to classify the occupancy of the parking space based on extracted features that are structural characteristics of the parking space, in contrast to recognizing extracted features of an occupant of the parking space, such as recognizing a parked car.

The parking space classifier extracts features, in other words structural characteristics of the parking space, from the images of the parking space. In an embodiment, the parking space classifier is trained to determine if these features belong to the parking space as such or not. Structural characteristics of the parking space, which may be extracted, may be invariant, e.g. architectural, characteristics of the parking space. For example, these may include floor features of the parking space, e.g. colour, patterns, roughness, warping and/or unevenness. Furthermore, features may comprise joints or grooves contained in the parking space. These may be architecturally intentional or may have developed over time due to wear. Also, lines or other markings of the parking space can be recognized as structural characteristics. Further recognizable features comprise objects with an elevation with respect to the footprint of the parking space, such as curbstones at the perimeter of the parking space, speed bumps, or separators to other parking spaces.

Also objects distanced from the parking space, but within the field of view of the at least one camera, may be included for feature extraction, e.g. parking ticket machines, cart shelters in the car park of a supermarket, rubbish bins, letter boxes or warning and information signs. Of course, for structures exterior to the parking space, the parking space classifier has to take into account that these objects may be invisible to the at least one camera due to visual obstacles other than an occupancy of the parking space.

In order to facilitate extracting features from the at least one image of the parking space and classifying the occupancy of the parking space based on the extracted features, the parking space classifier comprises at least one machine learning model, in particular a deep learning model using artificial neural networks. The at least one image is fed as input data to the parking space classifier. In case of an artificial neural network, the at least one image may be fed into an input layer. Before feeding images into the parking space classifier, the at least one image may be optimized by digital image processing, e.g. improving noise, brightness, image section.

According to the invention, at least one camera captures at least one image of the parking space. Advantageously, the at least one camera is fixed in its position and field of view. This way, features of the parking space remain at a fixed position within the images, supporting easier recognition and classification.

Capturing the at least one image of the parking space at an oblique angle has several advantages. Firstly, for a single camera, an oblique angle allows for a more perspective view, which is relevant in particular for identifying reflections or surface structures. Such a view may cause distortions, e.g. in markings of the parking area; however, the distortions may be removed during image processing or used in image recognition for identifying features. Capturing images with multiple cameras each at, in particular varied, oblique angles provides for multiple perspectives and improves image recognition, even if the image of one camera is unclear regarding its content. For example, if during sunset the images produced by one camera are greatly degraded by sun glare, another camera with another field of view and angle may provide sufficient data for classification.

The present method may use one image showing the entirety of the parking space. However, the entirety of the parking space may also be shown and two or more images produced by two or more cameras that are each located and oriented such that they each capture a different, but possibly overlapping part of the parking space. Using these multiple images, the parking space classifier may extract the features of the parking space from each image and classify the features jointly or separately for all images.

In the context of this invention, it is contemplated that the method may be repeated repeatedly in order to monitor the occupancy of a parking space over time. For this, at least one image of the parking space is captured regularly and fed to the parking space classifier. The time interval for repeating the classification method may be predefined and based on external conditions, such as time of day, brightness or weather conditions. Alternatively or additionally, new images of the parking space may also be captured and fed to the parking space classifier on demand. This latter alternative may, e.g., be used in automated valet parking (AVP) systems upon request to provide a parking space for a newly arrived vehicle.

In an embodiment, the parking space classifier comprises a feature extractor configured to extract structural characteristics from the images of the parking space, and a feature classifier configured to classify the occupancy of the parking space based on the extracted structural characteristics. The parking space classifier having at least these two components provides for reliable and efficient classification of the parking space.

In the context of the feature extractor and the feature classifier being configured to extract or classify, respectively, the method may comprise the feature extractor and the feature classifier being trained to extract or classify, respectively. In embodiments, the feature extractor performs edge detection and/or texture analysis.

The feature extractor may be configured, in particular trained, to extract structural characteristics from images of the parking space. Such structural characteristics may be features of the parking space itself as mentioned above. Furthermore, the feature extractor may be configured to extract features from objects occupying the parking space, e.g. the color, shape, edges or reflective properties of a vehicle. Having extracted features from the images, the feature classifier may be configured to analyze the extracted features, to assign the features to either the unoccupied parking space or an occupant of the parking space, and to classify the parking space by combining the results of the single feature's analysis.

In an embodiment, the feature extractor and the feature classifier are configured as layers of at least one artificial neural network or as separate artificial neural networks. Artificial neural networks, in particular convolutional neural networks (CNNs), are efficient and suitable tools for image recognition. For example, an artificial neural network may be one of a neural feedforward network, a recurrent neural network, a convolutional neural network and a generative adversarial network.

For reliable classification, the at least one machine learning model comprises at least one of a supervised classification algorithm, in particular linear regression, logistic regression, k-nearest neighbor, decision tree, support vector machines, random forests or artificial neural network algorithms, and an unsupervised classification algorithm, in particular a K-Means or Gaussian mixture models algorithm. For example, this is realized in an embodiment, wherein the feature extractor is configured as at least one artificial neural network and the feature classifier is configured as a classifier machine learning model not being an artificial neural network.

In particular, the parking space classifier is a binary classifier, wherein a binary classifier classifies instances into one of two classes, unoccupied or occupied.

In another embodiment, in the case the parking space is classified as occupied, the classification of the parking space further comprises at least one of a vehicle type or vehicle size, a vehicle identification, e.g. a license plate number, and a parking authorization. In such an embodiment, the parking space classifier may be a multi-label classifier, assigning multiple labels to the same at least one image as input data. Further classification allows for determining the occupancy of the parking space more precisely.

A vehicle type may. e.g., be a car, a truck, a motorbike, a bicycle or a forklift, although this list is not to be construed as exhaustive, in particular a particular vehicle model. Such a classification requires the recognition of features of both the parking space as well as the vehicle. Furthermore, the classification of the parking space may comprise dimensions of a vehicle occupying the parking space, e.g. length, height and/or width. The classification may furthermore comprise an indicator indicating whether a parked vehicle is parked such as to partially occupy an adjacent parking space.

A parking authorization may be determined by recognizing a vehicle parked in the parking space jointly with additional authorizing features, such as a color of the vehicle or logo attached to the vehicle, indicating affiliation with a known vehicle fleet. In another example, a parking authorization may refer to a specific car type registered for the parking space. This may be applicable for a rented parking space to one person or to a parking space available for a given vehicle type in a car sharing system. Also for classifying a parking authorization, the parking space classifier advantageously is configured to recognize features of authorized vehicles in addition to features of the parking space.

In another embodiment, the classification may further comprise values of confidence for the classification. This allows for checking the reliability and soundness of the parking space classifier.

The parking space can be characterized more precisely, when at least one environmental condition, in particular regarding at least one of precipitation, snow fall, snow coverage, cloudiness, fog, temperature, brightness, time, and cleanliness of the parking space, is identified by at least one of sensor readings of at least one environmental sensor and image analysis of the at least one captured image of the parking space, in particular based on an environmental conditions machine learning model configured to classify the captured image according to the at least one environmental condition prevalent in the captured image.

In embodiments, an environmental sensor is at least one of a brightness sensor, a solar radiation sensor, a sunlight sensor, a UV sensor, a humidity sensor, a rain gauge, a rain-snow sensor, an air pressure sensor, a temperature sensor, a rain sensor, a wind speed sensor, a wind direction sensor, a noise sensor, a negative oxygen ion detector, and a clock.

Environmental conditions may further comprise the current weather conditions, such as sunshine, clouds, fog, rainfall, hail and/or snowfall. Furthermore, light conditions, such as natural or artificial illumination of the parking space, may be identified as environmental condition. The latter may be determined by optical sensors, by image analysis of the captured images, and/or by obtaining information from a parking infrastructure if electric lighting is switched on near the parking space.

Besides, the cleanliness of the parking space may be regarded as an environmental condition. For example, tire wear accumulating on the parking space may cover lines or markings or change their appearance. Temporary litter on the parking space, such as single-use drinking cups or sheets of newspaper, may cover joints or grooves being characteristic to the parking space. Hence, including the cleanliness as environmental condition and, for example, adjusting the weights in the analysis by the parking space classifier, is useful for an accurate analysis. The cleanliness of the parking space can be obtained by image analysis of the at least one captured image of the parking space or can be obtained by dedicated sensor, for example, a light barrier at low height above the ground.

In an embodiment, the environmental condition is identified by image analysis based on at least one environmental conditions machine learning model. For example, multiple environmental conditions machine learning models, e.g. artificial neural networks, may be used, wherein each environmental conditions machine learning model is configured to classify the captured image according to at least one environmental condition. This way, for example, one model may determine the weather conditions and another model may determine the lighting conditions.

Even better accuracy is achieved in classifying the occupancy of a parking space, when the parking space classifier performs the classification of the at least one captured image of the parking space in dependence of the at least one identified environmental condition, wherein at least one of the at least one identified environmental condition is fed as additional environmental input data into the at least one machine learning model of the parking space classifier, wherein the machine learning model is configured and trained to perform the feature extraction, and in particular the feature classification, in dependence of the additional environmental input data, and the parking space classifier comprises two or more machine learning models that are configured to process images taken under different predefined environmental conditions, and a machine learning model is chosen to process the at least one captured image of the parking space that is adapted for the at least one identified environmental condition.

Feeding the at least one identified environmental condition to the parking space classifier allows for adjusting the feature extraction and feature classification to the identified environmental conditions. For example, if rain is known to change the reflectivity of the parking space's floor or its markings, the parking space classifier's analysis may be shifted towards other features of the parking space or adjusting confidence thresholds. Even more drastic, snow may cover various structural characteristics of the parking space, so that the parking space classifier may base its classification on the remaining, available extracted features or on extracted features changed by the snow cover.

Furthermore, time may act as additional environmental input data. For example, the parking space classifier may include in its classification that on a weekday a different occupation with vehicles is to be expected than on a weekend, or that different levels or types of occupations are expected for different times of the day. Furthermore, the parking space classifier may be configured and trained to perform the feature extraction, and in particular the feature classification, in dependence of the combination of at least two identified environmental conditions. For example, the classifier may disregard a sensor reading detecting snowfall, if, e.g., the current date and location are a day in July in central Europe.

Furthermore, depending on the at least one environmental condition, different machine learning models may be chosen for the parking space classification. For example, the parking space classifier may comprise a first machine learning model adapted for daylight conditions and a second machine learning model adapted for nighttime and/or artificial lighting conditions. In another example, the parking space classifier may chose a machine learning model for a season, such as summer or winter.

A broader spectrum of image input data may be acquired, if the at least one image is captured in at least one of the visible light range, ultraviolet light range and infrared light range and/or captured by at least one of a LiDAR camera and an ultrasonic camera. This way, more information about the parking space is collected and a more accurate classification becomes possible. For example, different light ranges or LiDAR or ultrasound may respond differently to different environmental conditions, e.g. rain or snow. Furthermore, while a joint or edge of the parking space may be invisible to image recognition with visible light, it may be easily detectable by LiDAR or ultrasound, wherein the additional channel of LiDAR or ultrasound provides more extractable features for the analysis.

In one embodiment, the at least one image of the parking space is part of at least one image sequence of the parking space, wherein in particular a motion sensor triggers to capture the at least one image sequence of the parking space upon detecting movement on the parking space, wherein the parking space classifier processes the at least one image sequence of the parking space as a whole, in particular by means of a combined analysis of the features extracted from the single images of the at least one image sequence.

An image sequence may be a temporal sequence of still images and/or a video. The time interval between images of the sequence may be predefined and may be governed by an external condition, such as an environmental condition and/or a trigger status of a motion sensor.

By extending the analysis of the at least one image to a sequence of at least one image each, a combined analysis of more data and therefore a more precise classification is available. For example, if in one image the feature extractor is only able to extract a feature with low confidence, the link between multiple images of a sequence showing the same situation with a few seconds interval may allow the feature classifier to add the confidence levels of all images of the sequence to confirm the occupancy. For example, such a combined approach may be instrumental in low-light situations.

Besides, using a motion sensor to trigger an image sequence may allow the parking space classifier to follow a parking event, switching the parking space from unoccupied to occupied, or to follow a leaving event, switching the parking space from occupied to unoccupied. In conditions, where the parking space classifier cannot determine the occupancy from a single image, the sequence can support the classification. This holds in particular, if the parking space classifier is furthermore trained to recognizing active vehicles or moving vehicles, e.g. by switched-on vehicle headlights.

In another embodiment, the parking space classifier comprises or has access to a reference library of previously extracted features, in particular structural characteristics of the parking space, and is configured to compare currently extracted features with previously extracted features from the reference library. In particular, the reference library comprises data of various environmental conditions and/or the parking space classifier comprises or has access to at least one reference library, wherein each of the at least one reference library comprises data of a predefined environmental condition. A comparison with previously extracted features may enhance the accuracy of the method. This allows the parking space classifier both to extract features from the single at least one image as well as with context with previous images. Therefore, using this additional historical information, the classifier may recognize the same parking space with its characteristics repetitively, thus stabilizing the classification.

Making use of this additional available information, in further embodiments, the parking space classifier compares the features extracted from the captured image of the parking space with previously extracted features from the reference library with respect to their respective locations in the images and identifies a decalibration in the at least one camera's absolute positioning by determining a displacement and/or rotation between the positions of the currently extracted features in the at least one currently captured image of the parking space and the positions of the same extracted features from previously captured images, wherein in particular the decalibration is corrected for by at least one of
- feeding current decalibration data as input to the parking space classifier,
- transforming subsequently captured images by applying a reverse of the currently identified decalibration and feeding the transformed captured images as input to the parking space classifier,
- updating the reference library with respect to the altered positions inside the images of the parking space of extracted features, and
- continuing training of the parking space classifier with the captured images of the parking space.

Moving the camera's absolute positioning will cause the images taken by the camera to have a different field of view. Thus, features of the parking space may be recorded at another angle, causing perspective distortions. The parking space classifier may remain unchanged, if the captured images are transformed by applying a reverse of the currently identified decalibration. Hence, the classifier's machine learning model does not have to be re-trained or re-configured, however, every newly captured image needs to be transformed.

When feeding the identified decalibration data as input to the parking space classifier, its machine learning model has to be more complex, however, once it has obtained the capability to deal with decalibration, e.g. shifts and/or rotations of the field of view of a camera, the method will continue to provide reliable occupancy information.

In such an example, the feature classifier may be configured to shift the structural characteristics identified by the feature extractor by applying the decalibration data, e.g. shifting by a displacement vector, before classifying the occupancy of the parking space based on the extracted structural characteristics. Instead, the feature classifier classifies the shifted structural characteristics.

In another example, the identified structural characteristics may remain unchanged, but the feature classifier is configured to be able to transform corresponding to decalibration data, e.g. adapting the weights of a neural network. If this transformed feature classifier is stored, it may be used for subsequently captured images without having to transform neither the captured images nor the feature classifier.

When operating a car park, the method for classifying an occupancy of a parking space may be performed regularly for each parking space. In an embodiment, the step of comparing the features extracted with previously extracted features and identifying a decalibration is only performed in some instances of performing the method.

In many instances of machine learning models, training is the key for excellent performance of the model. In an embodiment of the method for classifying an occupancy of a parking space, the training of the parking space classifier involves using at least one reference library comprising sample input data, wherein in particular the sample input data comprise sample input data of various environmental conditions or each of the at least one reference library is customized to a predefined environmental condition.

In particular, sample input data may comprise images of the parking space, in particular captured by the cameras deployed in the method, and a parking space classification of unoccupied or occupied. In embodiments, sample input data further comprise further information of at least one of vehicle type, vehicle size, vehicle identification and parking authorization as well as information about extracted features as well as values for the confidence of recognition. Advantageously, furthermore information about environmental conditions is included, so that the parking space classifier may be trained for various environmental conditions.

The training may be further improved, if, in embodiments, the method further comprises at least one of that the parking space classifier adds input data comprising at least one image of the parking space to the at least one reference library, if the input data exceeds a predefined first quality threshold, wherein in particular the predefined first quality threshold comprises exceeding a predefined level of confidence regarding parking space classification, and that the parking space classifier removes input data comprising at least one image of the parking space from the at least one reference library, if the input data undershoots a predefined second quality threshold, wherein in particular the predefined second quality threshold comprises the time since capturing the input data. Taking into account the time since capturing the input data helps in sorting out old images that may keep the training biased towards structural characteristic features that may no longer be present or that have changed over time, thus keeping the training base current.

The sample input data including additional input data may be employed in a training with unsupervised learning methods by the parking space classifier. For example, a pre-trained model may be used as a feature extractor, while a feature classifier is trained with the at least one reference library using an unsupervised learning algorithm.

Alternatively, the sample input data including additional input data may be employed in a training with supervised learning methods by the parking space classifier. The information that a parking space is either unoccupied or occupied may be provided by the parking space classifier's classification itself, by human interaction, by sensors such as a distance sensor or ultrasonic sensor, and/or by information provided by autonomously driving vehicles that inform about their position.

Removing input data from the at least one reference library is in particular useful when the characteristics of the parking space have changed. For example, if the markings of the parking space have washed out over time, a reference library without images including very white and fresh markings may lead to better results in feature extraction and occupancy classification. However, when choosing a time limit for the second quality threshold, repeating cycles in time, such as seasons, regular gardening such as tree-cut, refreshing worn markings on the ground or even intra-day cycles like cleaning the parking space from litter, may be taken into account.

Moreover, the object is also achieved by a system for classifying an occupancy of a parking space comprising at least one camera configured to capture at least one image of the parking space, in particular at an oblique angle, and a computing unit configured to run a program executing a method outlined above.

Such a system offers the same advantages, features and characteristics as the method described above. In order to avoid repetition, reference is made to the explanations above.

In an embodiment, the system further comprises at least one environmental sensor configured to acquire sensor data, wherein the input data for the parking space classifier comprises the acquired sensor data, wherein in particular the at least one environmental sensor is at least one of a brightness sensor, a solar radiation sensor, a sunlight sensor, a UV sensor, a humidity sensor, a rain gauge, a rain-snow sensor, an air pressure sensor, a temperature sensor, a rain sensor, a wind speed sensor, a wind direction sensor, a noise sensor, a negative oxygen ion detector and a clock. Including the current environmental conditions into the analysis yields a more precise classification result.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a schematic sketch of a system for classifying an occupancy of a parking space,
- Fig. 2: a schematic representation of input, processing, and output of a parking space classifier,
- Fig. 3: a schematic image of the field of view of a camera being directed at a parking space,
- Fig. 4: a schematic representation of a decalibration of images of a parking space, and
- Fig. 5: a flow chart of an embodiment of a method of classifying an occupancy of a parking space.

In the drawings, the same or similar types of elements or respectively corresponding parts are provided with the same reference numbers in order to prevent the item from needing to be reintroduced.

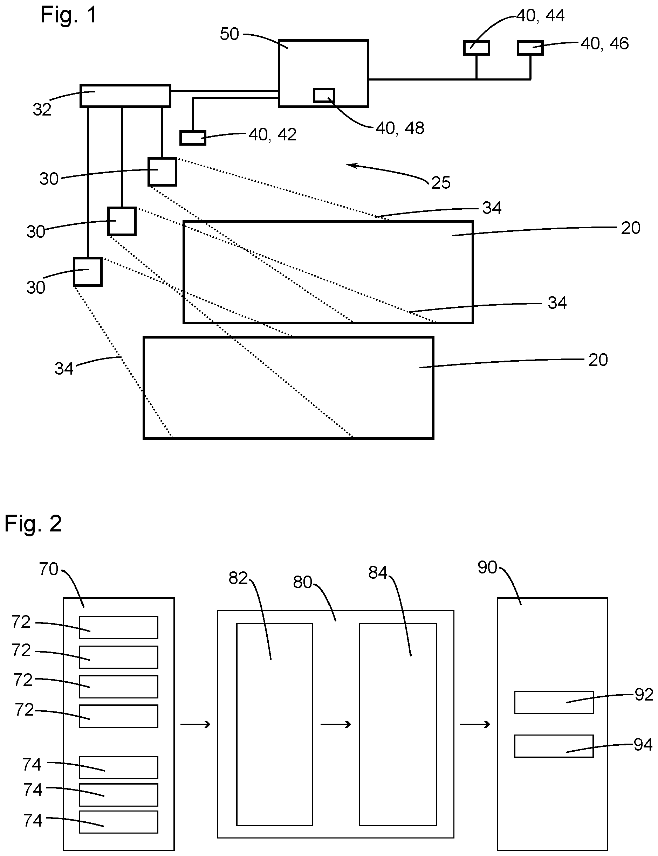

Fig. 1 illustrates a schematic representation of a system for classifying an occupancy of a parking space 20. The system comprises three cameras 30, wherein each of the cameras 30 is positioned to capture images of at least one of the parking spaces. While the field of view 34 of the outer cameras 30 contain only one parking space each, the camera 30 in the center has a field of view comprising parts of both parking spaces 20. Hence, the system shown in Fig. 1 may be used to classify the occupancy of either of the parking spaces 20. The cameras 30 are arranged to capture images of the parking spaces 20 at an oblique angle. In some embodiments, at least one of the cameras 30 may be a LiDAR camera, an ultrasonic camera or the like.

A camera control unit 32 is connected with the cameras 30. Camera control unit 32 collects the captured images and transmits them to a computing unit 50. The computing unit 50 comprises an image processor or a central processing unit configured to run a program executing a method of classifying an occupancy of a parking space 20 as described above. For this, the computing unit 50 runs a parking space classifier comprising a feature extractor as well as a feature classifier.

The computing unit 50 uses the input from the cameras 30 as input data 70 for the parking space classifier, as further explained in Fig. 2. Furthermore, sensor data 74 acquired by environmental sensors 40 is used as additional input data 70. The environmental sensors 40 may be connected to the computing unit 50, such as a brightness sensor 42 located nearby the parking spaces 20 or such as a rain sensor 44 or a temperature sensor 46, e.g., located at one central spot of a multilevel carpark. Other environmental sensors 40 are comprised by the computing unit 50, such as a clock 48, which is also understood as environmental sensor 40 in the context of the present disclosure.

In embodiments, the computing unit 50 is connected to further car-park infrastructure, such as a parking guidance system. Such a system may use the classification of occupancy of parking spaces 20 for showing a vehicle's driver a way to an unoccupied parking space 20 or to direct an autonomously driving car towards an unoccupied parking space 20.

Fig. 2 depicts a schematic representation of the input, the processing and the output of a parking space classifier 80. The parking space classifier 80 is fed by input data 70, wherein the input data 70 comprises images 72 as well as sensor data 74. The sensor data 74, e.g., are acquired by environmental sensors 40. In embodiments, all images 72 and all sensor data 74 are freshly acquired for each classification of a parking space 20. In other embodiments, only the images 72 are freshly captured for each classification, while some environmental sensors 40, such as a temperature sensor 46, are only read out with longer time intervals between measurements. Until the next acquisition of sensor data, the previous data set may be re-used in input data 70.

The parking space classifier 80 comprises a feature extractor 82 configured to extract structural characteristics from the images 72 of the parking space 20 in the input data 70. Besides, the parking space classifier 80 comprises a feature classifier 84 configured to classify the occupancy of the parking space 20 based on the structural characteristics extracted by the feature extractor 82.

In one embodiment, the feature extractor 82 and the feature classifier 84 may be separate artificial neural networks. The feature extractor 82 is a convolutional neural network. In other embodiments, e.g. the feature extractor 82 is a convolutional neural network and the feature classifier 84 is a machine learning model comprising a k-nearest neighbor algorithm. In even another embodiment, both the feature extractor 82 and the feature classifier 84 are part of a single artificial neural network, with the feature extractor 82 and the feature classifier 84 being layers of the artificial neural network.

The feature classifier 84 provides output data 90. The output data 90 comprise the occupancy 92 of the parking space 20 and, additionally, may comprise a confidence value describing the likelihood that the classification is correct. Furthermore, in this embodiment, the output data 90 further comprise the vehicle type 94 of a vehicle parked on the parking space 20. For this, the feature classifier 84 comprises both a classifier for characteristics of an unoccupied parking space 20 as well as for vehicles being parked on the parking space 20.

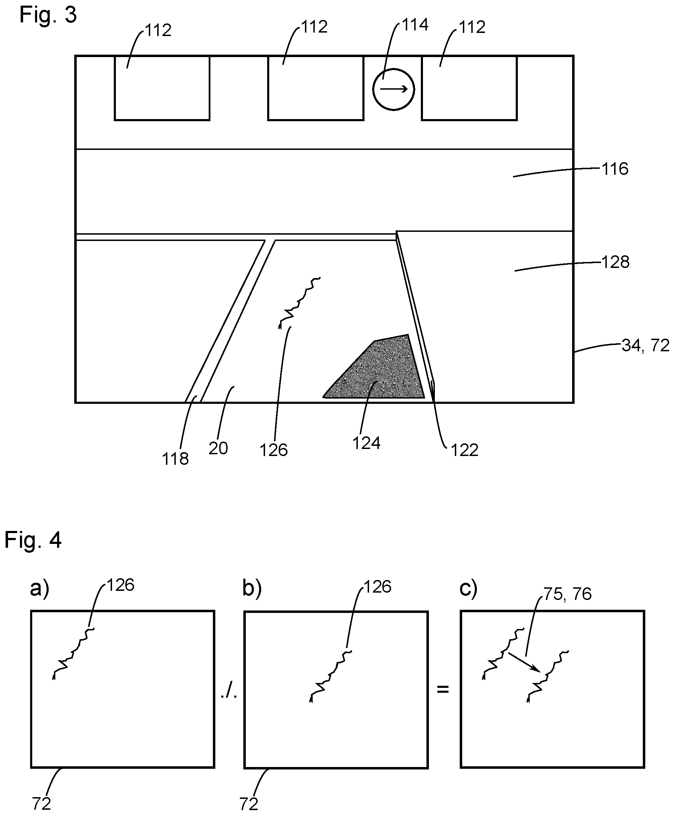

Fig. 3 shows a schematic image 72 of the field of view 34 of a camera 30 directed at a parking space 20. The parking space 20 is visible in the bottom center of image 72. A lane 116 for moving vehicles within the carpark as well as windows 112 and an exit sign 114 are visible in the background of image 72.

The parking space 20 is bordered by markings 118 on the left hand side, respective to the camera's field of view 34. On the right hand side, a curbstone 122 including a step from the parking space 20 to a pavement 128 terminates parking space 20.

In the simplified representation of Fig. 3, the parking space 20 itself comprises two structural characteristics, namely a groove 126 or split in the asphalt surface of the parking space 20 that has formed over time, e.g., due to stress and strain within the carpark's building, and a spot in one corner of the parking space 20 where the floor's roughness visibly varies, revealing a floor pattern 124. In real life, there will be several such features distributed over the area of parking space 20, which may not be instantly recognizable to the naked eye, but can be consistently and reliably extracted by the feature extractor 82 in images of the unoccupied parking space 20. Different features may be visible under different lighting or environmental conditions.

When the image 72 depicted in Fig. 3 is processed and classified by a parking space classifier 80, structural characteristics like groove 126 and floor pattern 124 are found as fingerprints of this parking space 20. Since the feature extractor 82 of the parking space classifier 80 detects these features, the parking space 20 is likely occupied, and a classification of the parking space 20 as unoccupied is warranted.

Furthermore, the parking space classifier 80 may also recognize the edges of the windows 112 in the background. By training, the parking space classifier 80 has to recognize that the characteristics of the windows 112 may indicate an unoccupied parking space 20, in particular the lower rim of the center window 112, however, this feature also disappears from the image 72 if a vehicle stops in the lane 116. Hence, not every feature extracted from images of an unoccupied parking space 20 can be used without further processing and information for parking space classification.

Fig. 4 is a schematic representation of a decalibration 75 of images 72 of a parking space 20. Therein, Fig. 4a) depicts a detail of image 72 showing of a part of a parking space 20 characterized by groove 126.

Fig. 4b) shows the same groove 126 inside the same image area defined by specific pixel ranges of the image. However, since the camera's alignment has changed, the groove 126 has moved with respect to its previous position. This may happen over time due to fatigue of material of the camera mount or due to slight impacts or vibrations caused by vehicle or pedestrian movements or wind.

Fig. 4a) may be included in a reference library, wherein also the groove 126 is described as characteristic including its position within the image 72. In this embodiment, the parking space classifier 80 compares the features extracted from a new image, Fig. 4b), with previously extracted features from the reference library with respect to their respective locations in the images. The classifier 80 identifies a decalibration 75 in the camera's absolute positioning by determining a displacement and/or a rotation between the positions and/or orientation of the currently extracted features and the positions stored in the reference library. Fig. 4c) shows the result of such a comparison by the parking space classifier 80. The observed decalibration 75, in this case a displacement 76, is described as a vector representing the shift in position of groove 126.

Subsequently, the parking space classifier 80 may use this information to reliably classify the parking space 20 without mechanically re-adjusting the decalibrated camera 30. For example, the current decalibration data may be fed as input data 70 to the parking space classifier 80. Alternatively, before feeding the images 72 of the respective camera into the parking space classifier 80, the images 72 may be transformed according to the obtained displacement vector.

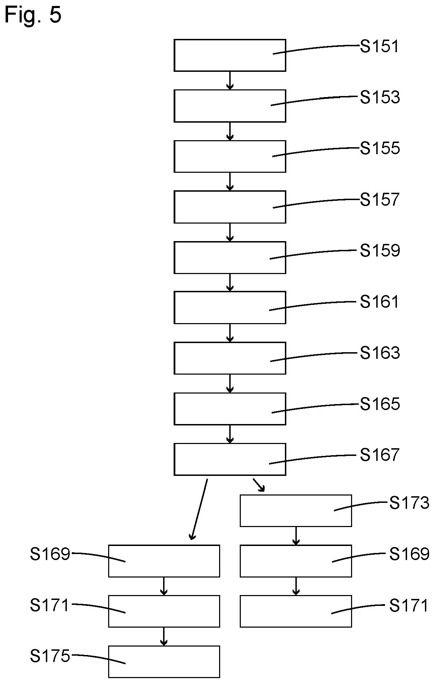

Fig. 5 depicts a flow chart of an embodiment of a method of classifying an occupancy of a parking space 20. First, at least one camera 30 captures at least one image 72 of the parking space 20 (step S151). Furthermore, environmental sensors 40 acquire sensor data 74 (step S153).

In this embodiment, image analysis of the at least one captured image 72 of the parking space 20 is used to identify at least one environmental condition (step S155). For example, the brightness and/or color temperature of the images 72 is used for determining whether the parking space 20 is illuminated by daylight or artificial light. For this, an environmental conditions machine learning model is configured to classify the captured images 72 according to the environmental condition.

In another embodiment, in an alternative step S155, the sensor readings of at least one environmental sensor 40, e.g. the sensor data 74, may be used for identifying at least one environmental condition.

Subsequently, the input data 70, comprising the images 72 and the sensor data 74 as well as the identified environmental condition, is fed into the parking space classifier 80 (step S157).

In this embodiment, the parking space classifier comprises multiple machine learning models configured to process images taken under different predefined environmental conditions. Here, these conditions are daylight, dawn as well as nighttime with artificial lighting. In the next step, the parking space classifier chooses one machine learning model, which is adapted to the identified environmental condition, i.e., in this example the brightness (step S159).

The chosen machine learning model acts as feature extractor 82 and extracts the structural characteristics of the parking space 20 (step S161).

In this embodiment, the parking space classifier 80 has access to multiple reference libraries of previously extracted features, each of the reference libraries corresponding to a predefined environmental condition. In the next step, the parking space classifier chooses the reference library according to the given environmental condition (step S163) and compares the currently extracted features with previously extracted features from the reference library with respect to their location within the images 72 (step S165).

Then, the parking space classifier 80 determines a decalibration 75, i.e. a displacement and/or a rotation, between the positions of the currently extracted features in the images 72 and the images 72 stored in the reference library (step S167).

If no decalibration is found, the extracted features of the images 72 are fed into the feature classifier 84 of the parking space classifier 80 (step S169). The feature classifier 84 classifies the occupancy of the parking space (step S171).

If a decalibration 75 is found, in this embodiment the parking space classifier 80 is configured to transform the captured images 72 by applying the reverse of the identified decalibration 75 (step S173) and subsequently feeds the transformed images 72 into the feature classifier 84 (step S169), which classifies the occupancy of the parking space (step S171).

Finally, in this embodiment, the parking space classifier 80 is configured to add images 72 to the reference library chosen according to the identified environmental condition, if a predefined first quality threshold is exceeded (step S175). This is only done if no decalibration 75 is identified. Furthermore, the classification confidence has to exceed a predefined threshold. This allows for constant development of the reference libraries and therefore ensures long-term reliability of the parking space classification.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 20: Parking space
- 25: System
- 30: Camera
- 32: Camera control unit
- 34: Field of view
- 40: Environmental sensor
- 42: Brightness sensor
- 44: Rain sensor
- 46: Temperature sensor
- 48: Clock
- 50: Computing unit
- 70: Input data
- 72: Image
- 74: Sensor data
- 75: Decalibration
- 76: Displacement
- 80: Parking space classifier
- 82: Feature extractor
- 84: Feature classifier
- 90: Output data
- 92: Occupancy
- 94: Vehicle type
- 112: Window
- 114: Road sign
- 116: Lane
- 118: Marking
- 122: Curbstone
- 124: Floor pattern
- 126: Groove
- 128: Pavement
- S151: Capturing at least one image
- S153: Acquiring sensor data
- S155: Identify at least one environmental condition
- S157: Feeding the input data into the parking space classifier
- S159: Choosing one machine learning model
- S161: Extract structural characteristics
- S163: Choosing the reference library
- S165: Compare currently extracted features
- S167: Determine decalibration
- S169: Feeding extracted features into the feature classifier
- S171: Classifying the occupancy of the parking space
- S173: Applying the reverse of the identified decalibration
- S175: Adding image to the reference library

## Claims

1. Method of classifying an occupancy of a parking space (20), wherein at least one camera (30) captures at least one image (72) of the parking space (20), in particular at an oblique angle, the at least one image (72) is fed to and processed by a parking space classifier (80), wherein the parking space classifier (80) extracts features from the images (72) of the parking space (20) and classifies the occupancy (92) of the parking space (20) as unoccupied or occupied, wherein the parking space classifier (80) comprises at least one machine learning model configured, in particular trained, to extract features from the at least one image (72) of the parking space (20) and to classify the occupancy (92) of the parking space (20) based on the extracted features.

2. The method according to claim 1, wherein the parking space classifier (80) comprises a feature extractor (82) configured to extract structural characteristics from the images (72) of the parking space (20), and a feature classifier (84) configured to classify the occupancy (92) of the parking space (20) based on the extracted structural characteristics.

3. The method according to claim 2, wherein the feature extractor (82) and the feature classifier (84) are configured as layers of at least one artificial neural network or as separate artificial neural networks.

4. The method according to claim 1 or 2, wherein the at least one machine learning model comprises at least one of a supervised classification algorithm, in particular linear regression, logistic regression, k-nearest neighbor, decision tree, support vector machines, random forests or artificial neural network algorithms, and an unsupervised classification algorithm, in particular a K-Means or Gaussian mixture models algorithm.

5. The method according to one of claims 1 to 4, wherein in the case the parking space (20) is classified as occupied, the classification of the parking space (20) further comprises at least one of a vehicle type or vehicle size, a vehicle identification and a parking authorization.

6. The method according to one of claims 1 to 5, wherein at least one environmental condition, in particular regarding at least one of precipitation, snow fall, snow coverage, cloudiness, fog, temperature, brightness, time, and cleanliness of the parking space (20), is identified by at least one of sensor readings of at least one environmental sensor (40) and image analysis of the at least one captured image (72) of the parking space (20), in particular based on an environmental conditions machine learning model configured to classify the captured image (72) according to the at least one environmental condition prevalent in the captured image.

7. The method according to claim 6, wherein the parking space classifier (80) performs the classification of the at least one captured image (72) of the parking space (20) in dependence of the at least one identified environmental condition, wherein at least one of
the at least one identified environmental condition is fed as additional environmental input data into the at least one machine learning model of the parking space classifier (80), wherein the machine learning model is configured and trained to perform the feature extraction, and in particular the feature classification, in dependence of the additional environmental input data, and
the parking space classifier (80) comprises two or more machine learning models that are configured to process images (72) taken under different predefined environmental conditions, and a machine learning model is chosen to process the at least one captured image (72) of the parking space (20) that is adapted for the at least one identified environmental condition.

8. The method according to one claims 1 to 7, wherein the at least one image (72) is captured in at least one of the visible light range, ultraviolet light range and infrared light range and/or captured by at least one of a LiDAR camera and an ultrasonic camera.

9. The method according to one of claims 1 to 4, wherein the parking space classifier (80) comprises or has access to a reference library of previously extracted features, in particular structural characteristics of the parking space (20), and is configured to compare currently extracted features with previously extracted features from the reference library.

10. The method according to claim 9, wherein the parking space classifier (80) compares the features extracted from the captured image (72) of the parking space (20) with previously extracted features from the reference library with respect to their respective locations in the images (72) and identifies a decalibration (75) in the at least one camera's absolute positioning by determining a displacement (76) and/or rotation between the positions of the currently extracted features in the at least one currently captured image (72) of the parking space (20) and the positions of the same extracted features from previously captured images (72), wherein in particular the decalibration (75) is corrected for by at least one of
- feeding current decalibration data as input to the parking space classifier (80),
- transforming subsequently captured images (72) by applying a reverse of the currently identified decalibration (75) and feeding the transformed captured images (72) as input to the parking space classifier (80),
- updating the reference library with respect to the altered positions inside the images (72) of the parking space (20) of extracted features, and
- continuing training of the parking space classifier (80) with the captured images (72) of the parking space (20).

11. The method according to one of claims 1 to 10, wherein the training of the parking space classifier (80) involves using at least one reference library comprising sample input data, wherein in particular the sample input data comprise sample input data of various environmental conditions or each of the at least one reference library is customized to a predefined environmental condition.

12. The method according to claim 11, wherein the method further comprises at least one of
that the parking space classifier (80) adds input data comprising at least one image (72) of the parking space (20) to the at least one reference library, if the input data exceeds a predefined first quality threshold, wherein in particular the predefined first quality threshold comprises exceeding a predefined level of confidence regarding parking space classification, and
that the parking space classifier (80) removes input data comprising at least one image (72) of the parking space (20) from the at least one reference library, if the input data undershoots a predefined second quality threshold, wherein in particular the predefined second quality threshold comprises the time since capturing the input data.

13. System (25) for classifying an occupancy of a parking space (20) comprising at least one camera (30) configured to capture at least one image (72) of the parking space (20), in particular at an oblique angle, a computing unit (50) configured to run a program executing a method according to one of claims 1 to 12.

14. System (25) according to claim 13, further comprising at least one environmental sensor (40) configured to acquire sensor data (74), wherein the input data for the parking space classifier (80) comprises the acquired sensor data (74), wherein in particular the at least one environmental sensor (40) is at least one of a brightness sensor (42), a solar radiation sensor, a sunlight sensor, a UV sensor, a humidity sensor, a rain gauge, a rain-snow sensor, an air pressure sensor, a temperature sensor (46), a rain sensor (44), a wind speed sensor, a wind direction sensor, a noise sensor, a negative oxygen ion detector and a clock (48).
